# EUROPEAN PATENT SPECIFICATION

(11) **EP 0 395 135 B1**
(45) Date of publication and mention of the grant of the patent: **02.02.1994**
(21) Application number: 90200889.5
(22) Date of filing: 11.04.1990
(51) Int. Cl.: A01M 23/02, A01M 23/12, G08B 13/18, A01M 23/38

(54) **Method for the registration of and/or combating pests, such as mice and rats**
Methode zur Registrierung und/oder Bekämpfung von Ungeziefer, zum Beispiel Mäuse und Ratten
Méthode d'enregistrement et/ou d'extermination de rongeurs, par exemple des souris et des rats

(30) Priority: 25.04.1989 NL 8901035
(43) Date of publication of application: 31.10.1990
(73) Proprietor: ECOTRONICS B.V., NL-4834 EA Breda (NL)
(72) Inventor: Van Dijnsen, Gerardus Johannes Anthonius, NL-4835 AC Breda (NL); Zandbergen, Mathijs Adriaan, NL-5056 BA Berkel Enschot (NL)
(74) Representative: Hoijtink, Reinoud

(56) References cited:
- EP-A- 0 159 634
- EP-A- 0 283 142
- CH-A- 349 122
- NL-A- 8 700 138

## Description

The present invention relates to a method for combating pests of rodent animals, the method comprising the following steps: the positioning of a first number of detection boxes at a first number of positions, of which the passage of the rodent animals to be combated is most likely; the registration of the number of passages of the rodent animals at each detection box during a predetermined period; and the selecting of a second number of detection boxes, where most passages have been registered, the second number being smaller than the first number.

The invention also relates to an apparatus for combating pests of rodent animals, comprising: a first number of detection boxes, a detector for detecting the passage of a rodent animal, a registration unit connected with each of the detection boxes and comprising at least a first number of counters, each detection box being connected with one of the counters.

Both such a method and such an apparatus are known from NL-A-8700138.

In this known method use is made of detection boxes which are positioned unobstrusively at selective locations in an area, in which the rodent animals have to combated, for example a shop, store house or production area, and said detection boxes will produce a signal on the detection of for example a mouse, which signal is converted into a counting pulse which can be counted and registered in a central registration unit to which all boxes are connected. On the basis of the measuring results it can be determined at what locations actions, like the positioning of poisonous bait, should be taken.

This known method has the advantage that the measures to be taken, like the distribution of poisonous bait, can be restricted to those locations, where this is most effective. However, the disadvantage remains that in this case still poisonous bait is used.

This known method uses an apparatus which is also described in said prior art of the above mentioned Dutch patent application.

However, this known method has the disadvantage that use has to be made of poisonous bait which may be dangerous, in particular to pets or small children.

The invention aims to provide a method, in which the danger for animals other than the rodent animals to be combated and the dangers for human beings are avoided. Generally the invention aims to provide a method, in which the disadvantages relating to poisonous bait are avoided.

This aim is reached by a method characterized in that the detection boxes are luring boxes, and that each of the second number of detection boxes is connected to the suction unit and the registration unit is connected to the suction unit, so that each time the passage of a rodent animal is detected by a luring box, the suction unit is activated.

This aim is also reached by an apparatus characterized in that the detection boxes are luring boxes, each having an aperture for the entrance of rodent animals, and that the apparatus comprises: a suction unit comprising suction means connectable with a registration unit, and a set of suction tubes connecting the suction unit with a second number of luring boxes, the second number being smaller than the first number.

By using the method according to the invention, in which the use is made of an apparatus according to the invention, it will be clear that the use of poisonous bait is avoided.

The invention provides thus a method according to which detecting luring boxes are positioned at the locations, where the passage of rodent animals is most likely. Then, during a period of for instance a week, the number of passages of rodent animals at each of the detecting luring boxes is registered. After said period a second number of luring boxes is chosen from the first number of luring boxes, at which the passages of the rodent animals appeared to be the most frequent. Only that second, smaller number of luring boxes is connected with the suction unit.

At this point, it has to be noted that the method according to the invention is often used in buildings with substantial size, so that the suction tubes connecting the luring boxes with the suction unit may have substantial lengths. By connecting only the luring boxes, at which the passage of rodent animals is most likely, a substantial improvement in length of pipe can be obtained. Here, it has to be taken in mind that those pipes have to be provided, but also have to be installed into a building to be protected, which involves a substantial amount of work. In this regard it is also noted that in public buildings, like stores, the pipes may have to be installed out of sight of the public, so that the amount of labour involved is substantially.

It will be clear that the present invention gives a substantial reduction in the number of pipes to be used.

EP-A-159634 describes a suction system which does not have a selection between locations, which are likely to be frequented by rodent animals and other locations. In this prior art method and apparatus each of the trapping tubes is connected with a suction unit, and there is no reduction in suction piping.

The invention will be illustrated in more detail by way of an embodiment with reference to the drawing. In the drawing:
Fig.1 shows a diagrammatically presented embodiment with only one luring box,
Fig.2 shows a plan view of the luring box of Fig.1 in longitudinal cross-section.

In the drawing a suction unit is indicated with 1. This suction unit may consist of a heavy vacuum-cleaner, or a vacuum drum, which is maintained under vacuum by external means, or a strong centrifugal motor with chip box. By way of a suction tube 2 this suction unit 1 is connected by way of a connection 3 with the suction tube 4 at the rear of a luring box 5, at its front provided with an entrance aperture 6, dimensioned in such a way, that a small rodent, such as a mouse, may just enter therethrough. A sensor is mounted in the luring box, for example near the aperture 6, in the case shown a passive infra-red sensor 7, which is activated by the presence of a rodent. This sensor is part of a detector circuit, the remainder of which is housed in the area 8 of the box. The inner area 9 of the box, wherein the entered rodent arrives, is in direct connection with suction tube 4, to which the suction tube 2 of the suction unit 1 is connected. The detector circuit is further connected with a central registration unit 12 by way of a connecting cable 11, which unit is provided with a presentation panel 13 and a printer outlet 14.

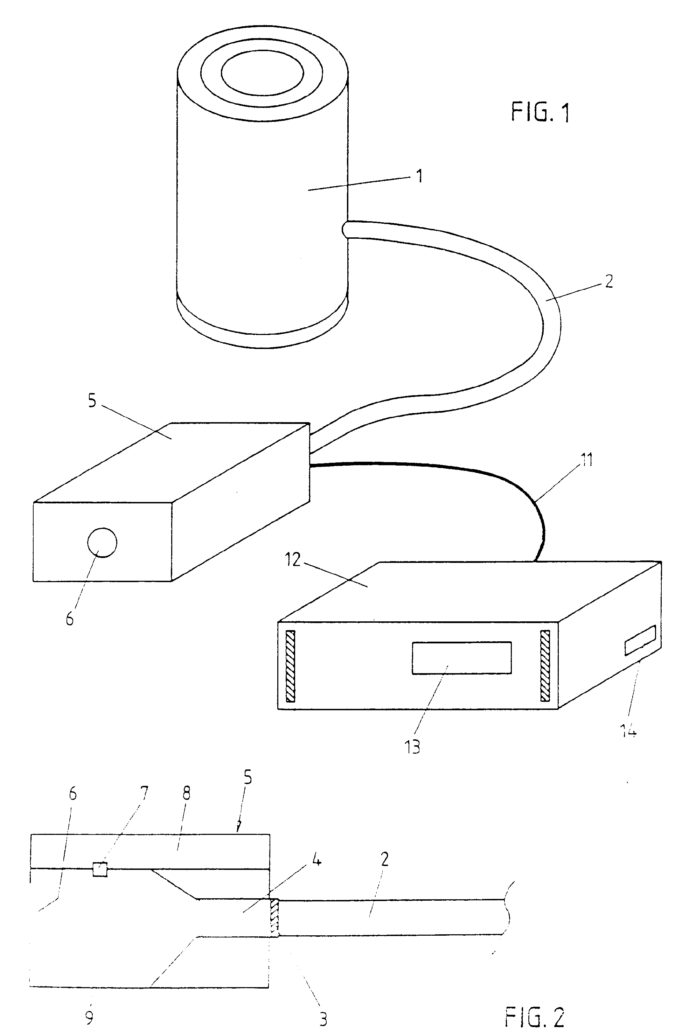

Though in the diagrammatic presentations of Fig.1 only one luring box is shown, which is connected with the suction unit 1, it will be understood, that in practice a number of such luring boxes 5, disposed at various positions in an area to be guarded, may be connected with a central suction unit.

If such a system is operative, the detector 7, mounted in said box, will signal the presence of a rodent, when the rodent enters the luring box 5, which signal will be processed by the electronics 8 to an outlet signal, that is passed to the central registration unit 12 by way of the connection cable 11. This pulse is counted by way of a suitable counter circuit and the number registered per luring box is shown on the presentation panel 13 and is stored in a memory, of which a list may be printed at intervals. If the suction unit 1 is not connected with the luring boxes, a selective registration takes place, from which can be concluded, which luring box or luring boxes should eventually be connected with the suction unit 1. If the latter is connected, each connected luring box will accomplish its eliminating activity, that is, as soon as a rodent has arrived into the interior area 9 of the luring box 5 through an aperture 6, the suction unit is activated by the detection signal, so that the animal is removed at short notice through the suction tube 2 to the suction unit 1.

The suction unit is activated by the detection signal of the luring box and remains operative for a specific period of time, which can be adjusted in the suction unit.

A signaling device (for example a lamp or counter) is mounted on the suction unit, indicating, whether the suction unit has been operative, thus avoiding unnecessary control of the receptacle in the suction unit.

The signaling remains present until it is reset manually.

It is also possible to register and to eliminate simultaneously, whereby the suction unit and the registration unit operate in combination.

Though the invention has been illustrated in the above by way of a system for combating a rodent pest, it will be obvious that it can be used for combating other pests as well by suitable modifications.

In such a case the dimensions of the various boxes and their apertures will have to be adapted to the size of the animals to be trapped.

In addition a number of variations are possible, which all fall within the scope of the claims of the present invention. This for example the suction tubes of a number of luring boxes may emerge into the container of the suction unit, or may be connected with a distribution duct, connected therewith. In addition each luring box may comprise its own registration in the form of a continuous counter, instead of using a central registration unit. Other variations and modifications will be obvious to the expert.

## Claims

1. Method for combating pests of rodent animals, the method comprising the following steps:
- the positioning of a first number of detection boxes at a first number of positions, of which the passage of the rodent animals to be combated is most likely;
- the registration of the number of passages of the rodent animals at each detection box during a predetermined period; and
- the selecting of a second number of detection boxes, where most passages have been registered, the second number being smaller than the first number,
**characterized in that** the detection boxes are luring boxes and that each of the second number of detection boxes is connected to a suction unit and the registration unit is connected to the suction unit, so that each time the passage of a rodent animal is detected by a luring box, the suction unit is activated.

2. Apparatus for combating pests of rodent animals, comprising:
- a first number of detection boxes, each box having a detector for detecting the passage of a rodent animal;
- a registration unit connected with each of the luring boxes and comprising at least a first number of counters, the detector of each luring box being connected with one of the counters,
**characterized in that** the detection boxes are luring boxes, each having an aperture for the entrance of rodent animals, and that the apparatus comprises: a suction unit comprising suction means connectable with a registration unit, and a set of suction tubes connecting the suction unit with a second number of luring boxes, the second number being smaller than the first number.

## Patentansprüche

1. Verfahren zur Nagetier-Schädlingsbekämpfung, wobei das Vefahren die folgenden Schritte umfaßt:
- Anordnen einer ersten Anzahl von Detektorkästen an einer ersten Anzahl von Stellen, an denen die Wahrscheinlichkeit, daß sie von den zu bekämpfenden Nagetieren durchlaufen werden, am größten ist,
- Registrieren der Anzahl der Durchlaufvorgänge der Nagetiere an jedem Detektorkasten während einer vorgegebenen Zeitperiode, und
- Auswählen einer zweiten Anzahl von Detektorkästen, an denen die größte Anzahl von Durchlaufvorgängen registriert wurde, wobei die zweite Anzahl kleiner als die erste Anzahl ist,
dadurch **gekennzeichnet**, daß die Detektorkästen Anlockkästen sind und daß jeder der zweiten Anzahl von Detektorkästen mit einer Saugeinheit verbunden ist und daß die Registriereinheit mit der Saugeinheit verbunden ist, so daß jedesmal dann, wenn das Hindurchlaufen eines Nagetiers durch einen Anlockkasten festgestellt wird, die Saugeinheit aktiviert wird.

2. Vorrichtung zur Nagetier-Schädlingsbekämpfung, mit:
- einer ersten Anzahl von Detektorkästen, wobei jeder Detektorkasten einen Detektor zur Feststellung des Hindurchlaufens eines Nagetiers aufweist,
- eine mit jedem der Anlockkästen verbundene Registriereinheit, die zumindestens eine erste Anzahl von Zählern aufweist, wobei der Detektor jedes Anlockkastens mit einem der Zähler verbunden ist,
dadurch **gekennnzeichnet**, daß die Detektorkästen Anlockkästen sind, die jeweils eine Öffnung für den Eintritt von Nagetieren aufweisen, und daß die Vorrichtung folgende Teile umfaßt: Eine Saugeinheit mit Saugeinrichtungen, die mit einer Registriereinheit verbindbar sind, und einen Satz von Saugrohren, die die Saugeinheit mit der zweiten Anzahl von Anlockkästen verbinden, wobei die zweite Anzahl kleiner als die erste Anzahl ist.

## Revendications

1. Procédé pour combattre les parasites rongeurs, le procédé comprenant les étapes qui suivent :
- le positionnement d'un premier nombre de boîtiers de détection dans un premier nombre de positions, dans lesquelles les animaux rongeurs à combattre sont le plus susceptibles de passer,
- l'enregistrement du nombre de passages des rongeurs dans chaque boîtier de détection, durant une période prédéterminée et
- la sélection d'un second nombre de boîtiers de détection, dans lesquels le plus grand nombre de passages a été enregistré, le second nombre étant inférieur au premier nombre,
caractérisé en ce que les boîtiers de détection sont des boîtiers pièges et en ce que chaque boîtier du second nombre de boîtiers de détection est relié à un ensemble d'aspiration et l'ensemble d'enregistrement est relié à l'ensemble d'aspiration de manière qu'à chaque détection du passage d'un rongeur dans un boîtier piège, l'ensemble d'aspiration soit actionné.

2. Appareil pour combattre les parasites rongeurs comprenant :
- un premier nombre de boîtiers de détection, chaque boîtier présentant un détecteur pour détecter le passage d'un rongeur,
- un ensemble d'enregistrement relié à chacun des boîtiers pièges et comprenant au moins un premier nombre de compteurs, le détecteur de chaque boîtier piège étant relié à l'un des compteurs,
caractérisé en ce que les boîtiers de détection sont des boîtiers pièges, chacun d'entre eux présentant une ouverture pour l'entrée de rongeurs et en ce que l'appareil comprend : un ensemble d'aspiration comprenant un moyen d'aspiration pouvant être relié à un ensemble d'enregistrement et un jeu de tubes d'aspiration, reliant l'ensemble d'aspiration à un second nombre de boîtiers pièges, le second nombre étant inférieur au premier nombre.
